# EUROPEAN PATENT SPECIFICATION

(11) **EP 0 871 315 B1**
(45) Date of publication and mention of the grant of the patent: **27.07.2005**
(21) Application number: 98302011.6
(22) Date of filing: 18.03.1998
(51) Int. Cl.: H04M 3/22, H04M 3/50, H04Q 7/38

(54) **System and method for processing dropped calls**
System und Verfahren zur Verarbeitung von Anrufverlusten
Système et méthode pour traiter des pertes d'appel

(30) Priority: 09.04.1997 US 842925
(43) Date of publication of application: 14.10.1998
(73) Proprietor: AT&T Wireless Services, Inc., Kirkland, Washington 98033 (US)
(72) Inventor: Amin, Umesh J., Redmond, Washington 98052 (US); Rotvold, Bruce E., Redmond, Washington 98052 (US)
(74) Representative: Harding, Richard Patrick

(56) References cited:
- EP-A- 0 325 713
- EP-A- 0 526 240
- WO-A-94/28689
- US-A- 5 239 571
- US-A- 5 566 236
- US-A- 5 590 177

## Description

### Field of the Invention

This invention relates generally to telecommunication call processing and more particularly to processing dropped calls.

### Background of the Invention

Although current telecommunication systems are generally highly reliable, there are occasions in which an established telephone call between two devices will be prematurely dropped. In a wired telecommunication system established calls are dropped very infrequently.

In a wireless telecommunication system, such as a cellular telephone system, established telephone calls are dropped somewhat more often than in the wired system. There are a number of reasons why a telephone call with a wireless telephone may be dropped. One reason for dropped calls is that the wireless telephone has left the coverage area of the wireless system. As is well known, cellular telephone systems are divided into cells, each of which is served by a base station which communicates with wireless telephones (i.e., mobile telephones) located within the cell. All the cells together make up the coverage area of the cellular system. If a mobile telephone travels outside the coverage area, the wireless communication channel between the mobile telephone and the wireless system will be lost and the call will be dropped. In some situations the mobile telephone may be entering the coverage area of another cellular service provider. In such a case, the call may continue only if the mobile telephone has roaming privileges in that other cellular system.

Another reason that an established call may be dropped in a cellular system is due to handoff. As is well known, when a mobile telephone travels from one cell to another cell, the call is handed off from the base station serving the one cell to the base station serving the other cell. In some situations the base station serving the other cell may not have any radio channels available for communication with the mobile telephone at the time of the handoff. In such a situation the established call with the mobile telephone will be dropped. Another reason for dropped calls in a cellular system is coverage holes, which are areas in the geographic serving area which do not receive signals from the system for some reason. Such coverage holes include both indoor and outdoor areas. If a mobile telephone enters a coverage hole where coverage is not available, radio communication with the serving base station will be lost and the call will be dropped. Calls in a cellular system may also be dropped due to RF interference and equipment failures.

Dropped calls are very inconvenient to callers. Re-establishment of the call is left to the parties to the call and neither party knows the intention of the other party. This may result in both parties attempting to call the other party, which may result in the connection being blocked. Alternatively, both parties may assume that the other party is going to initiate the call, resulting in no re-establishment of the call. The dropped call situation is worsened in that there is no indication to either party for the reason of the dropped call. These dropped calls often result in the parties not being able to fully communicate with each other.

U.S. Patent No. 5,566,236 describes a system and method that provide a tandem switch and call control/management platform to establish a telephone connection (bridge) between two parties. If either party is disconnected from the tandem switch, the telephone connection between the tandem switch and the remaining party is maintained, and the remaining party is prompted to indicate whether reconnection is desired. Alternatively, the system automatically attempts to reconnect to the disconnected party.

Thus, there is a need for an improved method and apparatus for processing dropped calls in telecommunications networks.

A first aspect of the present invention provides a method of processing, at a network node, a call between at least two communication devices, the method being characterised by: after detecting that a connection to a first communication device for a call has been dropped, determining without user input whether or not to attempt reconnection to the first communication device; if so, attempting to reconnect to the first communication device; or, if not, skipping attempting to reconnect to the first communication device.

A second aspect of the invention provides a computer program adapted to perform the method of the first aspect when the computer program is run on a computer system.

A third aspect of the invention provides a network node adapted to perform the method of the first aspect.

The present invention provides an improved system and method for processing dropped calls in a communication network. In accordance with the invention, if it is determined during an established call between at least two communication devices that a connection to one of the devices has been dropped, the system will automatically attempt to reconnect the dropped communication device if appropriate. If the reconnection attempt is successful, the system will re-establish the call between the at least two communication devices. In addition, the system may send a reconnection indication to either, or both, of the communication devices to indicate that the call has been reestablished.

If it is determined that an attempt to reconnect the dropped communication device is not appropriate, or if the attempt to reconnect the dropped communication device is unsuccessful, then the other communication device, which is still connected to the system, may be routed to voice mail so that the user of the still connected communication device can leave a message for the user of the dropped communication device.

In accordance with another embodiment of the invention, in addition to automatically attempting to reconnect the dropped communication device and re-establish the call, a status message is sent to the still connected communication device indicating that the connection to the dropped device has been dropped. In addition, the cause of the dropped connection may be determined and the status message may include the reason that the connection was dropped.

In one advantageous embodiment, the dropped communication device is a wireless telephone in communication with a wireless cellular network via a wireless communication link and the steps of the invention are carried out by a wireless network node.

Thus, the present invention provides an improved system and method for processing dropped telephone calls which provides more information to the users of the system and which increases the chances that communication between the users can continue, either through the re-establishment of the call or via voice mail.

These and other advantages of the invention will be apparent to those of ordinary skill in the art by reference to the following detailed description and the accompanying drawings.

### Brief Description of the Drawings

Fig. 1 shows a communication network within which the present invention may be implemented.
Fig. 2 is a flow diagram showing the steps to be performed in accordance with the invention.

### Detailed Description

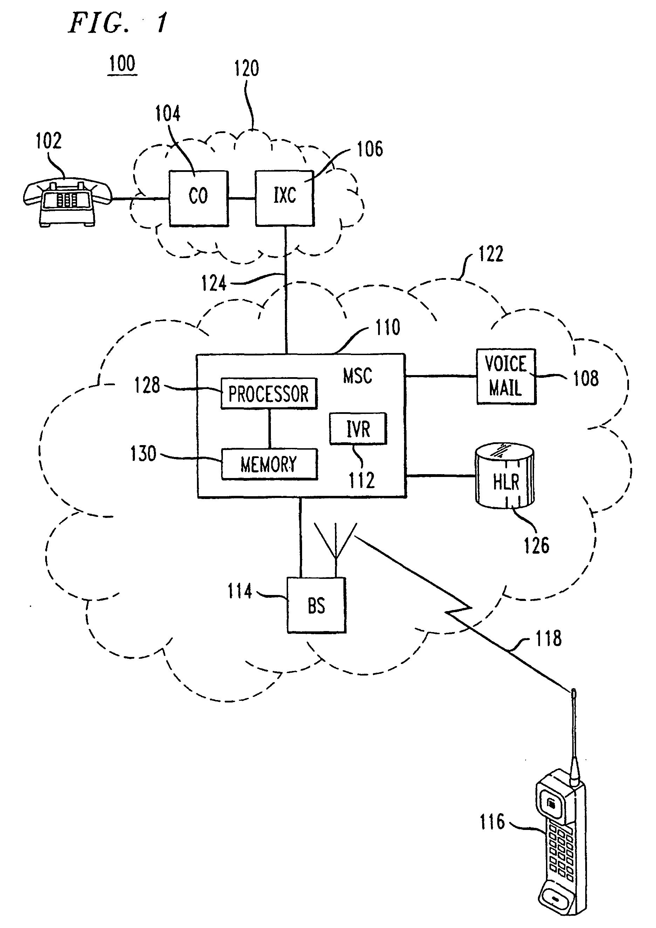

Fig. 1 shows a communication network 100 within which the present invention may be implemented. Network 100 includes the Public Switched Telephone Network (PSTN) 120 which is a landline network, and a wireless cellular network 122. PSTN 120 and wireless cellular network 122 are connected by communication link 124.

The PSTN 120 comprises a central office switch (CO) 104 connected to an interexchange carrier switch (IXC) 106. PSTN 120 contains multiple COs and IXCs, but only one CO and one IXC are shown in Fig. 1 for clarity. PSTN architecture is well known in the art and will not be described in further detail herein.

Wireless cellular network 122 comprises a base station (BS) 114 connected to a mobile switching center (MSC) 110. The MSC 110 is further connected to a voice mail node 108 and a home location register (HLR) database 126. The MSC 110 connects the wireless cellular network 122 to the PSTN 120 via communication link 124. As is well known, wireless cellular networks, such as network 122, generally contain a plurality of base stations, each of which communicates with mobile stations within the geographic serving area (cell) of the base station. The geographic area of all cells taken together is the coverage area of the wireless cellular network. The cell within which a mobile station is operating is called the serving cell, and the base station within the serving cell is called the serving base station. Each base station is connected to, and controlled by, an MSC. The MSC which is connected to the serving BS is the serving MSC. Depending on the architecture, a wireless cellular communication network may have more than one MSC, with each MSC controlling a plurality of BSs. The MSC connects the wireless cellular communication network to other networks, such as the PSTN, other wireless networks, and other data networks (e.g. Internet).

For ease of illustration, Fig. 1 shows one MSC 110 connected to one BS 114. As shown in Fig. 1, a mobile telephone 116 is communicating with serving BS 114 via a wireless communication channel 118. The protocol of the wireless communication channel 118 may be, for example, the air interface described by *TIA*/*EIA Interim* *Standard IS-136.1, 800 MHz TDMA Cellular - Radio Interface - Mobile Station - Base Station Compatibility - Digital Control Channel*, December 1994, Telecommunications Industry Association (hereinafter "IS-136").

A conventional call between a landline telephone 102 and a mobile telephone 116 may be established as follows. For purposes of illustration, assume that mobile telephone 116 is registered with the wireless cellular network 122 such that the MSC 110 knows which BS is the serving BS. In this illustration, assume that BS 114 is the serving BS. A calling party dials the telephone number associated with mobile telephone 116 at telephone 102. The CO 104 receives the dialed digits and routes the call to IXC 106. IXC 106 routes the call to MSC 110. MSC 110 routes the call to BS 114 with instructions for the BS 114 to establish a wireless communication channel 118 with the mobile telephone 116. In this manner a call is established between the landline telephone 102 and the mobile telephone 116. The MSC 110 stores in its memory 130 the telephone number of both the mobile telephone 116 and, if available, the landline telephone 102 in conjunction with the call. The telephone number of the landline telephone 102 may be received by the MSC 110 as automatic number identification (ANI) information from the IXC 106 in a well known manner. The above described routing of telephone calls through communication networks is well known in the art.

As described above in the background section, once a call is established with a mobile telephone, there are a number of possible reasons why the wireless communication channel 118 may be lost. Some reasons are listed below in table 1:

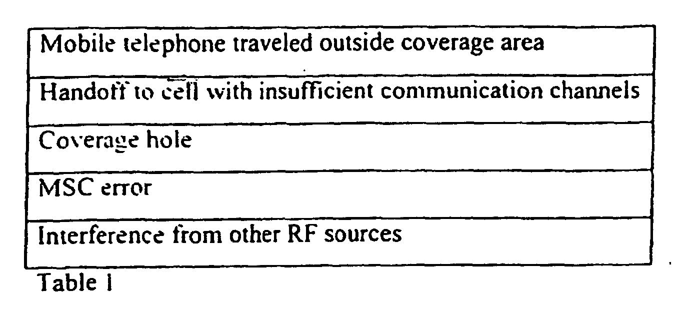

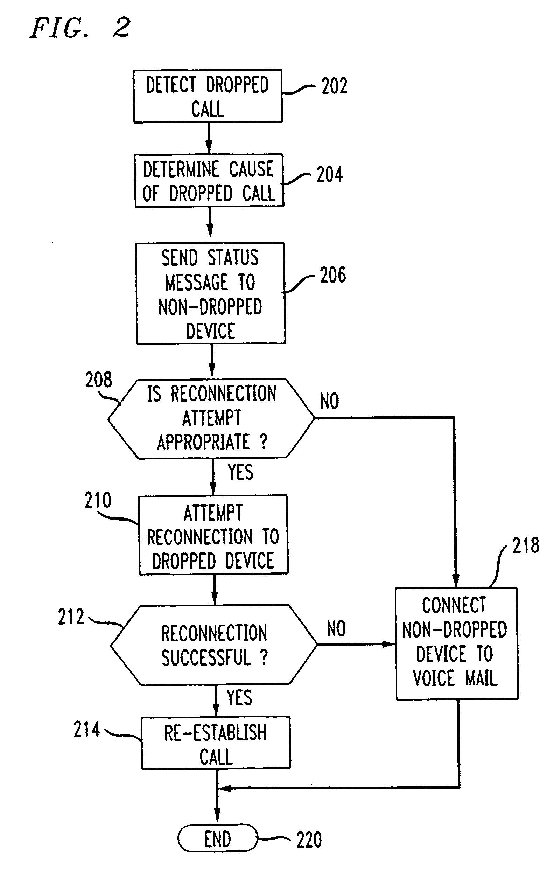

Assume for purposes of illustration that the communication channel 118 between the mobile telephone 116 and the BS 114 was dropped for some reason. The steps to be performed in accordance with the present invention are shown in Fig. 2. As is well known, the MSC 110 is an intelligent switching device and contains a processor 128 connected to memory 130. Memory 130 contains computer program instructions which are executed by the processor 128 which control the operation of the MSC 110. The memory 130 may be a RAM, ROM, magnetic disk, optical disk, or other type of computer storage medium. Further, memory 130 may be some combination of such computer storage media. MSC 110 may also contain other components for carrying out other functions of the MSC (e.g. routing) but such other components are not described herein and would be well known to one skilled in the art. Although the functions of MSC 110 have been described herein as being controlled by processor 128 executing stored computer program instruction, it is to be understood that such functions could also be carried out by hardware, or a combination of software and hardware.

Referring now to Fig. 2, in step 202 the MSC 110 detects a dropped call. MSC 110 is able to detect when a communication channel between a BS and a mobile telephone has been dropped by, for example, recognizing a loss of signaling information over the digital traffic channel in a manner which is well known in the art. In step 204 the MSC 110 determines the cause of the dropped call. One way to determine the cause of the dropped call is to analyze the Mobile Assisted Handoff (MAHO) list sent to the MSC 110 from the mobile telephone 116. In accordance with IS-136 each mobile telephone measures the signal strengths it is receiving from the base stations in nearby cells, and periodically transmits this list of signal strengths (the MAHO list) to the MSC 110 which uses the list to determine how to handle handoffs for that mobile telephone. It is possible, by analyzing the MAHO list sent by a mobile telephone, to determine that the mobile telephone has left the coverage area of the wireless cellular network. The MSC 110 may also determine the cause of the dropped call by performing statistical and RF analysis of the system. For example, over time calls in a particular geographic location may be susceptible to being dropped. Through statistical analysis the MSC 110 may be able to determine that a call which is dropped while the mobile telephone 116 is within that geographic area has been dropped due to a coverage hole. Similarly, if a call is dropped in an area which otherwise has been statistically low in dropped calls, the MSC 110 may determine that the call was dropped due to intermittent RF interference from other RF sources.

In step 206, the MSC 110 sends a status message to telephone 102. It is noted that although the wireless communication channel 118 between the BS 114 and mobile telephone 116 has been dropped, there is still a connection between telephone 102 and MSC 110 via CO 104, IXC 106, and communication link 124. MSC 110 keeps this connection established even though it has detected the dropped communication channel 118. Thus, in step 206, MSC 110 generates a voice message using interactive voice response (IVR) processor 112. IVR processors are well known and will not be described in detail herein. It is noted that in Fig. 1 IVR processor 112 is shown as part of MSC 110. In alternate embodiments IVR processor 112 may be a separated network node which is in communication with MSC 110.

Assume for purposes of illustration that the reason for the dropped communication channel was that the mobile telephone 116 entered a cell in which the serving BS did not have an available radio communication channel and therefore handoff was unsuccessful. In step 206 a voice message such as: "The mobile customer you were connected to has traveled to a location in which radio communication is temporarily not possible", is sent to the telephone 102 from the IVR processor 112 in the MSC 110.

In step 208 the MSC 110 determines whether a reconnection attempt is appropriate. Depending on the reason for the dropped communication link, an attempt to re-establish a wireless communication channel with the mobile telephone 116 may or may not be appropriate. Table 2 below indicates in which circumstances a reconnection attempt is appropriate.

**Table 2**

| **Reason for dropped call** | **Is reconnection attempt appropriate?** |
|---|---|
| Mobile telephone traveled outside coverage area | no |
| Handoff to cell with insufficient communication channels | yes |
| Coverage hole | yes |
| MSC error | yes |
| Interference from other RF sources | yes |

In the case where the mobile telephone 116 travels outside the coverage area of the wireless network 122, there is a poor chance that the mobile telephone 116 will reenter the coverage area within a short time frame, so the system will not try to re-establish communication in this case. In the case where the mobile telephone 116 has entered a cell which has insufficient radio channels for a successful handoff, it is appropriate to attempt a reconnection shortly after the call is dropped. In such a case, it is possible that some radio channel becomes available shortly after the call is dropped due to some other mobile telephone operating in the cell ending a call and thus freeing up a radio channel for the mobile telephone 116. In the case where the mobile telephone 116 has entered a coverage hole, it is appropriate to attempt a reconnection shortly after the call is dropped. In this case, it is possible that as the mobile telephone 116 moves, it will exit the coverage hole shortly after entering it. In the case of an MSC error, it is appropriate to attempt a reconnection shortly after the call is dropped. For example, one type of MSC error is when the MSC breaks a communication link between the serving base station and the mobile telephone prior to establishing a new communication link between the mobile telephone and a new base station during handoff. In this situation, it is appropriate to attempt a reconnection shortly after the call is dropped. In the case of interference from other RF sources, it is appropriate to attempt a reconnection shortly after the call is dropped because it is possible that the source of the RF interference has been removed.

If it is determined in step 208 that reconnection to the mobile telephone 116 is not appropriate, then in step 218 the MSC 110 routes the call from telephone 102 to a voice mail node 108. In addition, the MSC 110 via IVR processor 112 may send a message to the user at telephone 102 indicating that reconnection will not be attempted and that the call is being transferred to voice mail. Upon being connected to the voice mail node 108, the user of telephone 102 may then leave a message for the user of mobile telephone 116. The method steps end at step 220. In an alternate embodiment, instead of automatically routing the call from telephone 102 to voice mail node 108, the user of telephone 102 could be presented with the option of whether he/she wants to be connected to voice mail node 108.

If it is determined in step 208 that reconnection to the mobile telephone 116 is appropriate, then in step 210 the MSC 110 attempts to re-establish a wireless communication channel with mobile telephone 116. This step may be accompanied by a message from the MSC 110, via IVR processor 112, to the landline telephone 102 indicating that a reconnection attempt is in progress. The reconnection attempt to the mobile telephone 116 may include steps similar to those when a new call to the mobile telephone 116 comes in to the MSC 110. As described above in conjunction with the description of routing the original call, the MSC 110 stores in its memory 130, the telephone number of both the mobile telephone 116 and, if available, the landline telephone 102. Thus, the attempt to reconnect may include the MSC 110, via BS 114 (or some other BS connected to MSC 110 if appropriate), paging the mobile telephone 116 to indicate that there is a call for the mobile telephone 116. The paging of a mobile telephone to indicate that there is a call waiting for that telephone is well known and will not be described in detail herein. In an alternate embodiment, instead of automatically attempting to re-establish a wireless communication channel with mobile telephone 116, the user of landline telephone 102 could be presented with the option of whether he/she wants to be reconnected to mobile telephone 116. If the user of landline telephone 102 chooses not to be reconnected to mobile telephone 116, the call could be routed to voice mail node 108 as described above in conjunction with step 218.

In step 212 it is determined whether the reconnection attempt was successful. This determination may be made, for example, by attempting to reconnect for a period of time, and if reconnection is not made within that period of time, the reconnection attempt is deemed unsuccessful. Alternatively, this determination may be made by attempting to reconnect for certain number of attempts, and if reconnection is not made within a number of attempts, the reconnection attempt is deemed unsuccessful.

If it is determined in step 212 that the reconnection attempt was not successful, then control is passed to step 218 in which telephone 102 is connected to voice mail node 108 as described above. If it is determined in step 212 that the reconnection attempt was successful, then in step 214 the MSC 110 re-establishes the telephone call between telephone 102 and mobile telephone 116. This may be done, for example, by bridging the connection between telephone 102 and MSC 110, which connection was held by the MSC 110, with the newly established connection with mobile telephone 116. In addition, immediately preceding the bridging of the calls, the MSC 110, via IVR processor 112 or other means, may send a reconnection indication to the telephone 102 indicating that the reconnection attempt was successful. Such reconnection indication may be, for example, a voice message, distinctive ring, alphanumeric message in conjunction with a display screen (e.g., caller ID), or a DTMF tone sent to the telephone 102. Also immediately preceding the bridging of the calls, the MSC 110, via IVR processor 112 or other means, may send a reconnection indication to the mobile telephone 116 indicating that the current call is a re-establishment of the previous dropped call. The method ends in step 220.

In an alternate embodiment to that shown in Fig. 2. step 206 could be incorporated into step 210 and step 218 such that the status message is sent to the non-dropped device after the MSC 110 has determined whether a reconnection attempt is appropriate in step 208.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. For example, the embodiment described in the Detailed Description shows the MSC 110 performing the steps of the invention when a communication link to the mobile telephone 116 is dropped. In a similar manner, the MSC 110 could be configured to perform the steps of the invention when a communication link to a landline telephone is dropped. Furthermore, the CO 104 or the IXC 106 could be configured to perform the steps of the invention when a link to the landline telephone 102 or the mobile telephone 116 is dropped. Thus, the present invention is not limited to any particular type of communication device or network node, but the principles of the invention can be applied to any combination of communication devices and network equipment. Such embodiments could be implemented by one skilled in the art given the disclosure herein.

## Claims

1. A method of processing, at a network node, a call between at least two communication devices, the method being **characterised by**:
after detecting (202) that a connection to a first communication device for a call has been inadvertently dropped, determining (208) without user input whether or not to attempt (210) reconnection to the first communication device;
if so, attempting (210) to reconnect to the first communication device; or
if not, skipping attempting (210) to reconnect to the first communication device.

2. A method as claimed in claim 1 wherein the step of determining (208) whether or not to attempt (210) reconnection to the first communication device comprises determining (208) without user input whether or not to attempt (210) reconnection to the first communication device on the basis of a reason why connection to the first communication device was dropped.

3. A method as claimed in claim 1 or 2 and further comprising the step of detecting (202) that the connection to the first communication device has been dropped.

4. A method as claimed in claim 3 wherein the detecting (202) comprises recognising a loss of signalling information for the call.

5. A method as claimed in any preceding claim and further comprising sending (206) a message to a second communication device reporting the inadvertently dropped connection.

6. A method as claimed in claim 5 wherein the message indicates a reason why the connection has been dropped.

7. A method as claimed in any of claims 1 to 4 further comprising:
if reconnection fails, connecting (218) a second communication device to voice mail.

8. A method as claimed in any one of claims 1 to 6 further comprising:
if reconnection succeeds, re-establishing (214) the call.

9. A method as claimed in any one of claims 1 to 8 and comprising determining (208) to attempt reconnection if the dropped connection has been dropped due to a handoff to a cell with insufficient communication channels in a wireless cellular network (122).

10. A method as claimed in any one of claims 1 to 8 and comprising determining (208) to attempt reconnection if the inadvertently dropped connection has been dropped due to a coverage hole in a wireless cellular network (122).

11. A method as claimed in any one of claims 1 to 8 and comprising determining (208) to attempt reconnection if the dropped connection has been dropped due to an MSC error in a wireless cellular network (122).

12. A method as claimed in any one of claims 1 to 8 and comprising determining (208) to attempt reconnection if the dropped connection has been dropped due to RF interference.

13. A method as claimed in any one of claims 1 to 8 wherein the determining step (208) is based at least in part on statistical analysis of a wireless cellular network (122).

14. A method as claimed in any one of claims 1 to 8 wherein the determining (208) is based at least in part on analysis of a mobile assisted handoff list.

15. A method as claimed in any one of claims 1 to 7 and comprising determining (208) not to attempt reconnection if the dropped connection has been dropped due to travel by the first communication device outside a coverage area of a wireless cellular network (122).

16. A method as claimed in any previous claim wherein the first communication device is a wireless telephone (116).

17. A method as claimed in any one of claims 1-16 wherein the network node is a mobile switching centre (110).

18. A computer program comprising program code means adapted to perform the method of any one of claims 1 to 16 when the computer program is run on a computer system.

19. A computer program as defined in claim 18 embodied on a computer-readable medium.

20. A network node comprising means adapted to perform the method of any one of claims 1-16.

## Patentansprüche

1. Ein Verfahren zum Verarbeiten, an einem Netzknoten, eines Anrufs zwischen wenigstens zwei Kommunikationseinrichtungen, wobei das Verfahren **gekennzeichnet ist durch** die folgenden Schritte:
nach Erfassen (202), dass eine Verbindung zu einer ersten Kommunikationseinrichtung für einen Anruf unbeabsichtigt fallengelassen worden ist, Bestimmen (208) ohne eine Benutzereingabe, ob eine erneute Verbindung zu der ersten Kommunikationseinrichtung versucht werden soll oder nicht (210);
wenn dem so ist, Versuchen (210) eine neue Verbindung zu der ersten Kommunikationseinrichtung herzustellen; oder
wenn nicht, Überspringen des Versuchs (210) zu der ersten Kommunikationseinrichtung eine neue Verbindung herzustellen.

2. Verfahren nach Anspruch 1, wobei der Schritt zum Bestimmen (208), ob eine erneute Verbindung zu der ersten Kommunikationseinrichtung versucht werden soll oder nicht (210) umfasst ein Bestimmen (208) ohne eine Benutzereingabe, ob eine erneute Verbindung zu der ersten Kommunikationseinrichtung versucht werden soll oder nicht (210) auf Grundlage eines Grunds, warum die Verbindung zu der ersten Kommunikationseinrichtung fallengelassen wurde.

3. Verfahren nach Anspruch 1 oder 2 und ferner umfassend den Schritt zum Erfassen (202), dass die Verbindung zu der ersten Kommunikationsreinrichtung fallengelassen worden ist.

4. Verfahren nach Anspruch 3, wobei das Erfassen (202) ein Erkennen eines Verlusts von Signalisierungsinformation für den Anruf umfasst.

5. Verfahren nach irgendeinem vorangehenden Anspruch und ferner umfassend ein Senden (206) einer Nachricht an eine zweite Kommunikationseinrichtung, die die unbeabsichtigt fallengelassene Verbindung berichtet.

6. Verfahren nach Anspruch 5, wobei die Nachricht einen Grund anzeigt, warum die Verbindung fallengelassen worden ist.

7. Verfahren nach irgendeinem der Ansprüche 1 bis 4, ferner umfassend:
wenn eine erneute Verbindung fehlschlägt, Verbinden (218) einer zweiten Kommunikationseinrichtung mit einer Voicemail.

8. Verfahren nach irgendeinem der Ansprüche 1 bis 6, ferner umfassend:
wenn eine erneute Verbindung erfolgreich ist, erneutes Einrichten (214) des Anrufs.

9. Verfahren nach irgendeinem der Ansprüche 1 bis 8 und umfassend ein Bestimmen (208) eine erneute Verbindung zu versuchen, wenn die fallengelassene Verbindung als Folge einer Übergabe (Handoff) an eine Zelle mit unzureichenden Kommunikationskanälen in einem drahtlosen zellularen Netz (122) fallengelassen worden ist.

10. Verfahren nach irgendeinem der Ansprüche 1 bis 8 und umfassend ein Bestimmen (208) eine erneute Verbindung zu versuchen, wenn die unbeabsichtigt fallengelassene Verbindung als Folge eines Abdeckungslochs in einem drahtlosen zellularen Netz (122) fallengelassen worden ist.

11. Verfahren nach irgendeinem der Ansprüche 1 bis 8 und umfassend ein Bestimmen (208) ein erneute Verbindung zu versuchen, wenn die fallengelassene Verbindung als Folge einer MSC Fehlers in einem drahtlosen zellularen Netz (122) fallengelassen worden ist.

12. Verfahren nach irgendeinem der Ansprüche 1 bis 8 und umfassend ein Bestimmen (208) eine erneute Verbindung zu versuchen, wenn die fallengelassene Verbindung als Folge einer RF Störung fallengelassen worden ist.

13. Verfahren nach irgendeinem der Ansprüche 1 bis 8, wobei der Bestimmungsschritt (208) wenigstens teilweise auf eine statistische Analyse eines drahtlosen zellularen Netzes (122) gestützt ist.

14. Verfahren nach irgendeinem der Ansprüche 1 bis 8, wobei das Bestimmen (208) wenigstens teilweise auf eine Analyse einer Liste für eine von Mobilstationen unterstützte Übergabe (Mobile Assisted Handoff List) gestützt ist.

15. Verfahren nach irgendeinem der Ansprüche 1 bis 7 und umfassend ein Bestimmen (208) eine erneute Verbindung nicht zu versuchen, wenn die fallengelassene Verbindung als Folge einer Bewegung durch die erste Kommunikationseinrichtung außerhalb eines Abdeckungsgebiets eines drahtlosen zellularen Netzes (122) fallengelassen worden ist.

16. Verfahren nach irgendeinem vorangehenden Anspruch, wobei die erste Kommunikationseinrichtung ein drahtloses Telefon (116) ist.

17. Verfahren nach irgendeinem der Ansprüche 1 - 16, wobei der Netzknoten ein Mobilvermittlungszentrum (110) ist.

18. Computerprogramm, umfassend eine Programmcodeeinrichtung, die dafür ausgelegt ist, um das Verfahren nach irgendeinem der Ansprüche 1 bis 16 auszuführen, wenn das Computerprogramm auf einem Computersystem ablaufen gelassen wird.

19. Computerprogramm nach Anspruch 18, verkörpert auf einem von einem Computer lesbaren Medium.

20. Netzknoten, umfassend eine Einrichtung, die dafür ausgelegt ist, um das Verfahren nach irgendeinem der Ansprüche 1-16 auszuführen.

## Revendications

1. Procédé de traitement, au niveau d'un noeud de réseau, d'un appel entre au moins deux dispositifs de communication, le procédé étant **caractérisé par**:
après la détection (202) du fait qu'une connexion sur un premier dispositif de communication pour un appel a été perdue par inadvertance, la détermination (208) sans une entrée d'utilisateur de si oui ou non il convient de tenter (210) une reconnexion sur le premier dispositif de communication;
s'il en est ainsi, la tentative (210) de reconnexion sur le premier dispositif de communication; ou
si ce n'est pas le cas, le saut de la tentative (210) de reconnexion sur le premier dispositif de communication.

2. Procédé selon la revendication 1, dans lequel l'étape de détermination (208) de si oui ou non il convient de tenter (210) une reconnexion sur le premier dispositif de communication comprend la détermination (208) sans une entrée d'utilisateur de si oui ou non il convient de tenter (210) une reconnexion sur le premier dispositif de communication sur la base d'une raison pour laquelle une connexion sur le premier dispositif de communication a été perdue.

3. Procédé selon la revendication 1 ou 2, et comprenant en outre l'étape de détection (202) du fait que la connexion sur le premier dispositif de communication a été perdue.

4. Procédé selon la revendication 3, dans lequel la détection (202) comprend la reconnaissance d'une perte d'information de signalisation pour l'appel.

5. Procédé selon l'une quelconque des revendications précédentes, et comprenant en outre l'envoi (206) d'un message sur un second dispositif de communication qui rapporte la connexion perdue par inadvertance.

6. Procédé selon la revendication 5, dans lequel le message indique une raison pour laquelle la connexion a été perdue.

7. Procédé selon l'une quelconque des revendications 1 à 4, comprenant en outre:
si une reconnexion échoue, la connexion (218) d'un second dispositif de communication sur une messagerie vocale.

8. Procédé selon l'une quelconque des revendications 1 à 6, comprenant en outre:
si la reconnexion est couronnée de succès, le ré-établissement (214) de l'appel.

9. Procédé selon l'une quelconque des revendications 1 à 8, et comprenant la détermination (208) de s'il convient de tenter une reconnexion si la connexion perdue a été perdue du fait d'un transfert sur une cellule moyennant des canaux de communication insuffisants dans un réseau cellulaire sans fil (122).

10. Procédé selon l'une quelconque des revendications 1 à 8, et comprenant la détermination (208) de s'il convient de tenter une reconnexion si la connexion perdue par inadvertance a été perdue du fait d'un trou de couverture dans un réseau cellulaire sans fil (122).

11. Procédé selon l'une quelconque des revendications 1 à 8, et comprenant la détermination (208) de s'il convient de tenter une reconnexion si la connexion perdue a été perdue du fait d'une erreur MSC dans un réseau cellulaire sans fil (122).

12. Procédé selon l'une quelconque des revendications 1 à 8, et comprenant la détermination (208) de s'il convient de tenter une reconnexion si la connexion perdue a été perdue du fait d'une interférence RF.

13. Procédé selon l'une quelconque des revendications 1 à 8, dans lequel l'étape de détermination (208) est basée au moins en partie sur une analyse statistique d'un réseau cellulaire sans fil (122).

14. Procédé selon l'une quelconque des revendications 1 à 8, dans lequel l'étape de détermination (208) est basée au moins en partie sur une analyse d'une liste de transferts assistés de mobile.

15. Procédé selon l'une quelconque des revendications 1 à 7, et comprenant la détermination (208) de ne pas tenter une reconnexion si la connexion perdue a été perdue du fait d'un déplacement par le premier dispositif de communication à l'extérieur d'une zone de couverture d'un réseau cellulaire sans fil (122).

16. Procédé selon l'une quelconque des revendications précédentes, dans lequel ledit premier dispositif de communication est un téléphone sans fil (116).

17. Procédé selon l'une quelconque des revendications 1 à 16, dans lequel le noeud de réseau est un centre de commutation mobile (110).

18. Programme d'ordinateur comprenant un moyen de code de programme qui est adapté pour réaliser le procédé selon l'une quelconque des revendications 1 à 16 lorsque le programme d'ordinateur est déroulé sur un système d'ordinateur.

19. Programme d'ordinateur selon la revendication 18, mis en oeuvre sur un support lisible par ordinateur.

20. Noeud de réseau comprenant un moyen qui est adapté pour réaliser le procédé selon l'une quelconque des revendications 1 à 16.
